# EUROPÄISCHE PATENTANMELDUNG

(11) **EP 2 295 841 A1**
(43) Veröffentlichungstag der Anmeldung: **16.03.2011**
(21) Anmeldenummer: 10162558.0
(22) Anmeldetag: 11.05.2010
(51) Int. Cl.: F16L 13/007, F16L 25/10, F16L 13/16

(54) **Verfahren zum Verbinden von Rohren und Rohrverbindungen**

(30) Priorität: 15.09.2009 DE 102009041533
(71) Anmelder: ELB-Form GmbH, 6773 Vandans (AT)
(72) Erfinder: Reiner, Markus, 6700, Bludenz (AT)
(74) Vertreter: Neidl-Stippler, Cornelia

(57) **Zusammenfassung**

Die Erfindung betrifft ein Verfahren zum verbinden von Rohren, bei dem ein erstes Rohr mit einem zweiten Rohr durch Falzen verbunden wird, wobei mindestens ein Rohr aus einem zum Falzen ausreichend duktilem Material besteht sowie eine Rohrverbindung zwischen zwei Rohren 10, 20 mit einer Falzverbindung 30 im Verbindungsbereich.

## Beschreibung

Die Erfindung betrifft ein Verfahren zum Verbinden von Rohren sowie eine Rohrverbindung aus zwei Rohren.

Rohre im Sinne der vorliegenden Erfindung sind ummantelte Räume - längliche Hohlkörper - mit gegenüber ihrer Längsabmessung kleinen Querabmessungen (Transportrohre, wie Lüftungskanäle, Abgasrohre, Kamine, Katalysator-anschlußrohre; längliche Gehäuse leichte Trägerstrukturen (Gitterrahmenteile) etc. aus relativ inflexiblem Material (flexible Rohre werden allgemein als Schläuche bezeichnet).

Rohre besitzen häufig einen runden Querschnitt, welcher für die gebräuchlichsten Anwendungsfälle die optimale Bauform darstellt. Zur Verwendung als statisches Element mit erhöhter Knickfestigkeit werden sie auch mit rechteckigen, ovalen und anderen Querschnitten hergestellt. Rohre werden unter anderem genutzt als: Transportwege für Flüssigkeiten, Gase oder rieselfähige Schüttgüter oder Rohrpost; konstruktive Elemente im Maschinenbau, bspw. als Achsen oder Wellen; als leichte statische Elemente, zum Beispiel als Fachwerkteil, Gitterrohrrahmenteil, Gerüststruktur. Rohre können gebogen sein und sind keineswegs auf gerade Hohlteile eingeschränkt.

Der Einsatzbereich eines Rohres wird durch seine Eigenschaften wie Querschnitt, Werkstoff, Oberflächengüte, Durchmesser, Druckstufe bestimmt. Rohre werden aus den unterschiedlichsten Werkstoffen gefertigt (z. B. Metallen, Keramik, Kunststoff, Holz und anderen natürlichen Materialien) Metallrohre werden heutzutage entweder mit einer geschweißten oder gefalzten Längsnaht oder nahtlos hergestellt.

Rohre mit geringer Wanddicke im Verhältnis zu ihrem Außendurchmesser werden i.d.R. als geschweißte Rohre gefertigt. Zum Schweißen von Rohren wird zunächst durch Biegen oder Walzen von Blech ein Hohlkörper hergestellt, der dann an den Stößen verschweißt wird. Rohre bis zu etwa einem Meter Durchmesser können längs geschweißt werden, größere Rohre werden spiralnahtgeschweißt und Großrohre aus Grobblechen, gebogen und in Stücken verschweißt. Problematisch ist auch, wenn die Schweißstellen/Lötstellen der Rohrleitung undicht werden und dadurch Abgase oder schädliche Fluide nach Außen dringen können.

Metall-Rohre bis zu einem Durchmesser von etwa 200 mm bei großen Wanddicken werden üblicherweise nahtlos hergestellt. Das bisher (für Nichteisenmetalle) meist angewandte Verfahren beruht darauf, dass ein glühender Block oder Bolzen aus Messing, Kupfer, Stahl etc. mittels einer hydraulischen Presse durch eine ringförmige Matrize stranggepresst wird. Rohre aus Kupfer und Stahl müssen unmittelbar danach in Wasser rasch abgekühlt werden. Die Länge der gepressten Rohre beträgt in der Regel unter 50 m. Neuere Verfahren der Herstellung nahtloser Rohre verfolgen das Ziel, möglichst lange Rohre kontinuierlich herzustellen. Dabei wird zunächst mittels Strangguß ein Rohr geformt wird, das unmittelbar danach durch Walzen im Durchmesser verkleinert wird. Wenn Rohre rotationssymmetrisch sind, können sie auch im Schleuderguß hergestellt werden.

Die Herstellung bzw. Verarbeitung nahtloser Rohre kann auch durch plastisches Umformen erfolgen, z. B. durch Extrudieren (Kunststoffe), Schrägwalzen, Stopfenwalzen, Streckreduzieren, Stoßbankverfahren oder insbesondere Pilgerschrittverfahren oder aber auch durch Querkeilwalzen mit Dornen.

In weiteren Prozeßschritten werden die Rohre oft durch Ziehen weiterverarbeitet, um bestimmte Durchmesser, Wandstärken, Materialfestigkeiten und Oberflächenqualitäten zu erzielen. Die fertigen Rohre werden bei größeren Durchmessern in handelsübliche Längen (weit verbreitet z.B. 6 m) geschnitten. Rohre mit kleinen Durchmessern gelangen meist zu so genannten 'Coils' gewickelt in den Handel.

Folgende metallische Werkstoffe sind üblich - wobei die Aufzählung keineswegs vollständig ist: Stahl, Gußeisen, Kupfer, Messing, Nickel, Leichtmetalle, Blei sowie Legierungen der vorgenannten und deren Komposite mit Fasern und Partikeln und Kombinationen aus verschiedenen Werkstoffen, wie Glas/Metall (Email). Weiterhin werden Rohre auch aus nichtmetallischen Werkstoffen verwendet hergestellt: Kunststoffe, Keramik, Beton, Basalt, Holz, Glas, Verbundmaterialien wie faserverstärkten oder partikelverstärkten Kunststoffen.

Problematisch bei Rohren ist üblicherweise ihr Anschluß oder Verbindung an andere Hohlkörper oder Strukturen. Viele Verbindungen werden geschraubt, weich-oder hartgelötet, geschweißt, geklebt, per Dichtung ineinandergeschoben, per Spannring geklemmt, nur gesteckt oder gepreßt. Es bestehen auch Quetschverschraubungen. Verbindungsmöglichkeiten sind Schweiß- und Lötnähte, Flansche, Muttern, Rohrverbindungselemente, Spannringe etc., Formteile, Verschraubungen sowie vorgebogene Rohrstücke. Typische Formteile sind T-Stücke, Bögen 45°, 90° und 180°, sowie konzentrische und exzentrische Reduzierungen.

Es ist besonders schwierig, Rohre aus unterschiedlichen Materialien zu verbinden, so bilden zwei Metalle oft ein galvanisches Element, korrodieren an der Verbindungsstelle. Bei geschweißten und geklebten Verbindungen treten ferner Brüche bei unterschiedlichen thermischen Ausdehnungskoeffizienten auf. Rohrleitungsverbindungen oder Rohrverbindungen dienen zum Anschließen von Abschnitten an Rohrabschnitte und Bauteile. Weiterhin ist es problematisch, in Rohren Elemente zu befestigen, wie bspw. Schalldämpfer, Resonatoren, Meßsonden, Rückstaueinrichtungen, Strömungslenkungsbleche und -körper.

Je nach den betrieblichen Anforderungen (lösbare oder nicht lösbare Verbindung), den Betriebsbedingungen (niedriger oder hoher Druck bzw. niedrige oder hohe Temperatur) und dem Werkstoff der Rohrabschnitte und Formstücke (schweißbarer oder nicht schweißbarer Werkstoff) muss die geeignete und passende Rohrverbindung gewählt werden.
- Schweißverbindungen - für alle Drücke und Temperaturen möglich
- Flanschverbindungen - für hohe Drücke, Temperaturen begrenzt
- Schraubverbindungen - für mittlere Drücke und Temperaturen
- Muffenverbindungen - für niedrige Drücke und Temperaturen
- Manschettenverbindungen - mittels der sog. Canadamanschette für niedrige Drücke und Temperaturen für Kanalisationsrohre, mit Manschettendichtungen (z. B. Flex Seal) können auch Rohre unterschiedlicher Durchmesser und/oder Materials verbunden werden.

Die Verbindung von Rohren mit unterschiedlichen Wandstärken, aus unterschiedlichem Material und besonders unterschiedlichem Wärmeausdehnungskoeffizienten ist problematisch und die Verbindungsstelle stellt eine permanente Leckage-Gefahr dar.

Es ist daher Aufgabe der Erfindung, eine einfache Rohrverbindung für Rohrleitungen zu entwickeln, die sicher und ohne Schweiß- oder Lötverbindungen zwischen Rohrabschnitten herstellbar ist.

Die Aufgabe wird erfindungsgemäß durch ein Verbindungsverfahren mit den Merkmalen des Patentanspruches 1 gelöst. Weiterhin bezieht sich die Erfindung auch auf eine Rohrverbindung mit den Merkmalen des Patentanspruches 10. Vorteilhafte Weiterbildungen ergeben sich aus den abhängigen Ansprüchen.

Falzverbindungen haben den Vorteil, auch nicht miteinander verschweißbare oder verklebbare Materialien verbinden zu können. Ferner ist es ein wenig störanfälliges Verfahren, da keine Schweißfehler oder Klebefehler möglich sind, die zu Undichtigkeiten führen. Es kann dadurch auch Rohrmaterial unterschiedlicher Ausdehnungskoeffizienten für thermisch belastete Verbindungen verwendet werden, es können auch Materialien unterschiedlicher Korrosivität oder aber verschiedener Duktilität miteinander verbunden werden, wobei die Art des Falzens dann entsprechend anzupassen ist. Gegebenenfalls kann zwischen verschiedene aufeinanderliegende Metalle ein Isolationsmaterial eingefalzt/eingeklemmt werden, welches das Wandern von die Korrosion fördernden Elektronen zwischen den beiden Materialien verhindert. Es kann auch Dichtmaterial zu Vermeidung von Undichtigkeiten eingefalzt werden. Schließlich können so Rohrinnenelemente durch Mit-Einfalzen befestigt werden, wie Resonatoren, Schalldämpfer, Meßsonden, Rohreinbauten, Blenden und Strömungsleitanordnungen.

In den meisten hier interessierenden Fällen ist mindestens ein Rohr ein Metallrohr Unter "Metallrohr" werden im Zusammenhang mit der Erfindung Rohre verstanden, die mindestens eine Metallschicht aufweisen - sie können zusätzlich mit metallischen und nichtmetallischen Schutzüberzügen oder aber durch Einbetten von Fasern, Partikeln od. dgl. verstärkt/geschützt sein. Es können aber auch entsprechend geeignete Kunststoffrohre - gegebenenfalls nach Erwärmen - oder aber sonstige faltbare Materialien gefalzt werden.

Alle Einfach-Falze können unter verschiedenen Winkeln ausgeführt werden - solche, die nicht als Doppelfalz ausgebildet sind. Sie sind beispielsweise bei der Verbindung von Materialien mit unterschiedlicher Duktilität sinnvoll.

Typische Rohrmaterialien sind ausgewählt aus der Gruppe bestehend aus Metall-Legierungen, duktilen Kupferlegierungen, Eisenlegierungen, duktilen Aluminiumlegierungen.

Gegebenenfalls kann zur verbesserten Falzbarkeit mindestens ein Rohrende vor dem Falzen erwärmt werden. Es ist auch möglich, die verbundenen Rohre nach dem Falzen zu härten.

Bspw. kann das eine Rohr aus austenitischem Stahl und das andere Rohr aus kostengünstigem ferritischem Stahl sein.

Es ist aber auch möglich, dass mindestens ein Rohr nicht metallisch ist, bspw. aus Sintermaterial oder Keramik.

In diesem Zusammenhang ist es auch in bestimmten Fällen möglich, dass ein Rohr nicht aus duktilem Material ist.

So kann eine Verbindung zwischen Gegenständen ausgewählt aus der Gruppe bestehend aus: Katalysatoren und Abgasführungsrohren; Heizungsrohren, Transportleitungen hergestellt werden, ohne zu Kleben oder zu Schweißen, was bspw. die Verwendung nicht schweißbarer Legierungen, wie Sinterlegierungen oder Gußlegierungen oder aber MIM-Legierungen, ermöglicht.

Falze haben den Vorteil, thermisch hochbelastbare Verbindungen hoher Zuverlässigkeit zu bilden, wobei Ausdehnungskoeffizientenunterschiede nicht wesentlich für die Haltbarkeit sind.

Vorteilhafte Weiterbildungen ergeben sich aus den abhängigen Ansprüchen.

Im folgenden werden Ausführungsbeispiele erfindungsgemäßer Resonatoren anhand der Zeichnung beispielhaft erläutert. Dabei zeigen
Fig. 1 schematisch die Herstellung einer gefalzten Rohrverbindung zwischen zwei Rohren im wesentlichen gleicher Duktilität mit Doppelfalz;
Fig. 2 eine weitere Ausführungsform einer erfindungsgemäßen gefalzten Rohrverbindung mit eingefalztem Dichtmaterial;
Fig. 3 eine Ausführungsform, bei der ein Rohr aus duktilem Material und das andere Rohr aus weniger duktilem Material besteht.
Fig. 4 eine Ausführungsform, bei der Rohre unterschiedlicher Wanddicken miteinander verbunden werden;
Fig. 5 a - c eine Ausführungsform mit Einarbeiten von Innenelementen eines Resonators; und
Fig. 6: einen Falz mit gewinkelter Anordnung zur Rohrleitung.

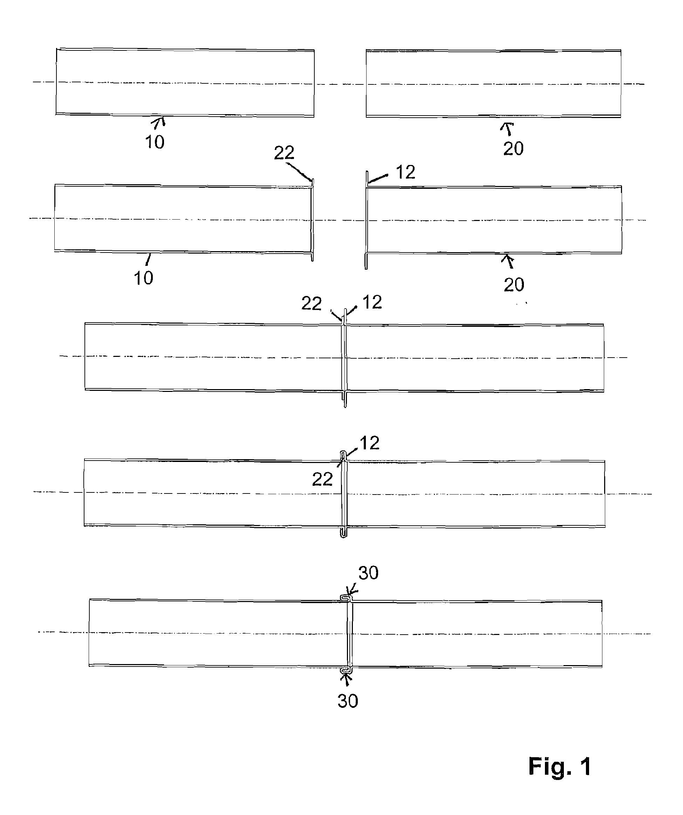

Fig. 1 stellt eine Ausführungsform dar, bei der Rohre 10, 20 gleicher Materialien und gleicher Wanddicken miteinander verbunden werden. Zunächst werden die zu verbindenden Endbereiche der jeweiligen Rohre unterschiedlich weit aufgebogen. Danach werden in an sich bekannter Weise die beiden aufgebogenen Endbereiche 12, 22 aneinandergelegt, mittels eines Falzwerkzeugs zunächst das längere aufgebogene Endteil 12 um das kürzere aufgebogene Endteil 22 gelegt und sodann dieses Sandwhich durch an die Rohroberfläche angelegt. Diese Doppel-Falzverbindung ist dicht, von lokalen Fehlstellen unabhängig.

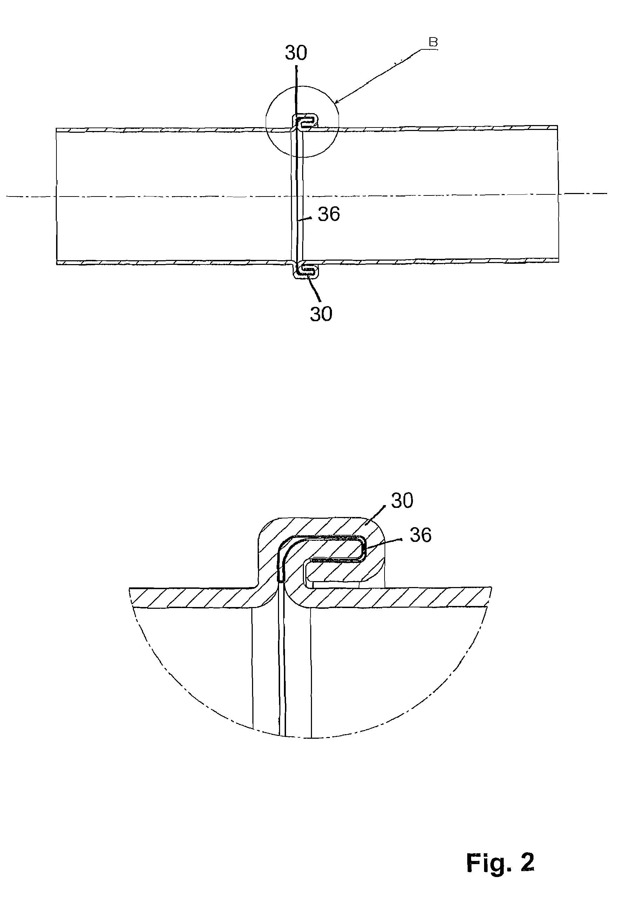

Fig. 2 zeigt eine Ausführungsform eines Doppelfalzes mit eingefalztem Dichtmaterial 14, mittels dessen die Dichtigkeit des Falzes auch bei höherer Druckbelastung der Rohre oder aber gasförmigem Material, das in einer Rohrleitung mit Falz transportiert wird, sicherzustellen.

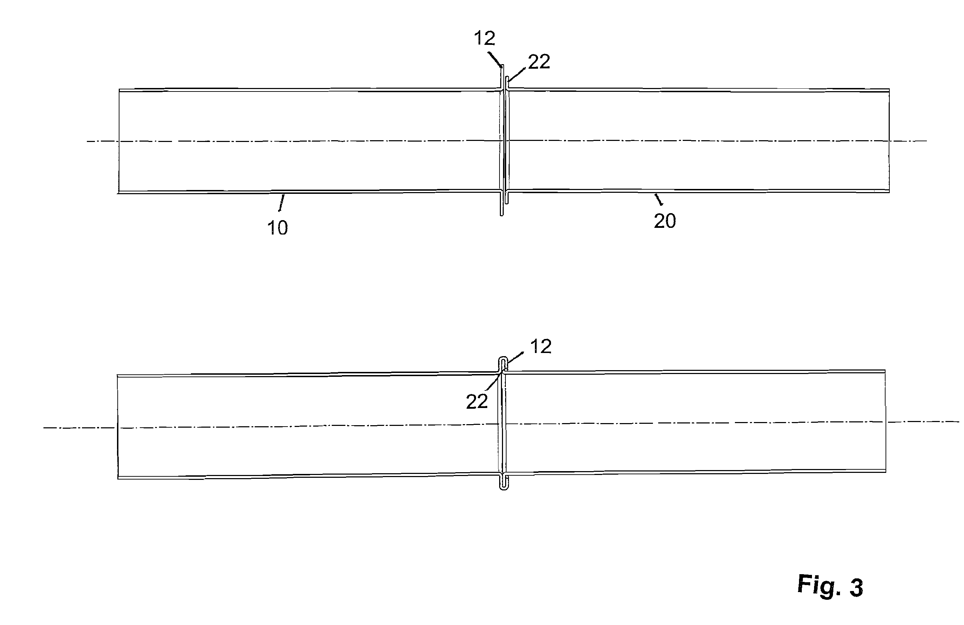

Fig. 3 zeigt eine Falzverbindung zwischen in zwei Rohren in etwa gleicher Wandstärke, aber unterschiedlicher Verformbarkeit. Das Rohr mit schlechterer Verformbarkeit 20 wird während seiner Herstellung mit einem aufgebogenen Endabschnitt 22 gefertigt, während das duktile Rohr 10 um eine vorherbestimmte Länge, welche in etwa dem Doppelten der Höhe des aufgebogenen Endabschnitts 22 des weniger duktilen Rohrs entspricht, aufgebogen wird. Beide aufgebogenen Rohrenden 12, 22 werden aneinandergelegt und der Abschnitt aus duktilerem Material 12 um den Abschnitt aus weniger duktilem Material 22 gefalzt.

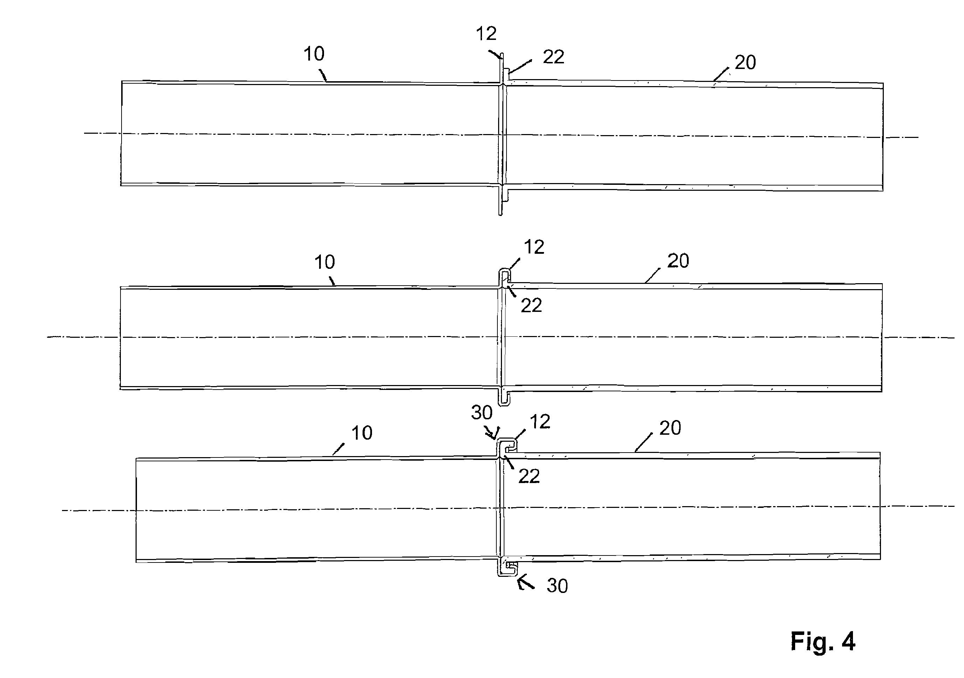

Fig. 4 zeigt das Verbinden eines dickeren, unflexiblen Rohrs 20 mit einem flexiblen, dünnwandigeren Rohr 20. Dabei wird das Rohr 20 mit der größeren Wandstärke weniger stark bzw. nicht gebogen und umgeformt - also um eine geringere Höhe aufgebogen, während das Rohr geringerer Wandstärke mehr aufgebogen wird. Dazu wird das dickere Rohr während seiner Herstellung mit einem Flansch 22 versehen, der bspw. angegossen oder bei sonstigen Urformverfahren angeformt sein kann. Das dünnwandigere, flexible Rohr 10 wird in seinem Endbereich aufgebogen und der aufgebogene längere dünnwandige Blechabschnitt 12 um den aufgebogenen Endbereich 22 des dickwandigeren Rohrs gefalzt. Auch diese Verbindung ist gegenüber thermischen Belastungen haltbar und löst das Problem der Verbindung unterschiedlicher Rohrwandstärken in eleganter Weise. Gegebenenfalls kann der so hergestellte Falz noch mit einer aufgebrachten Manschette gesichert werden.

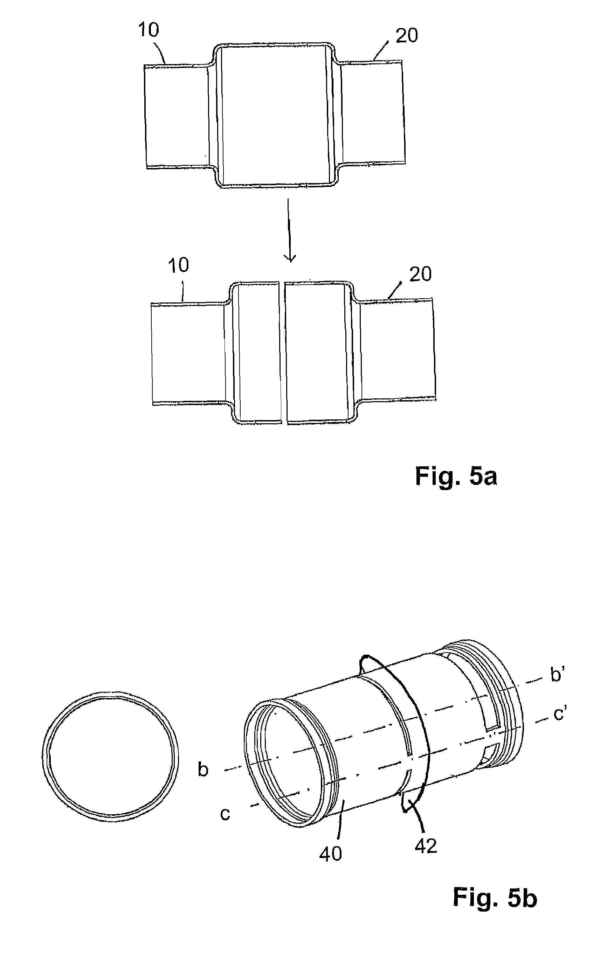

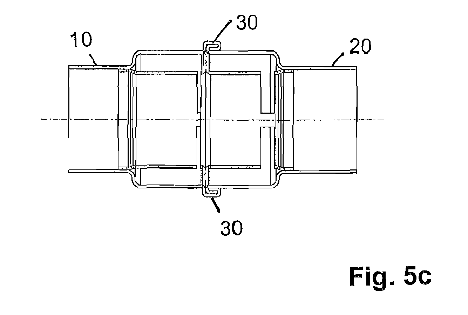

Fig. 5 a - c erläutert, wie Rohrinnenelemente beim Falzen durch Einfalzen befestigt werden. Hier wird ein Doppelkammer-Resonator in einem aufgeweiteten Rohrabschnitt ausgebildet. Dabei werden durch Einfalzen eines Umfangsflansches 42 an einem Innenwandrohr 40 eines Resonators zwischen Rohrwand und Innenwandrohr die Resonatorkammern aus Umfangsflansch, Rohrwand und Innenwandrohr gebildet, wobei keine aufwendigen Befestigungsmittel wie Schweißen oder Löten zum Anbringen des Innenwandrohrs erforderlich sind. Die so hergestellte Verbindung ist thermisch hoch belastbar und gegenüber häufigeren thermischen Wechseln stabil.

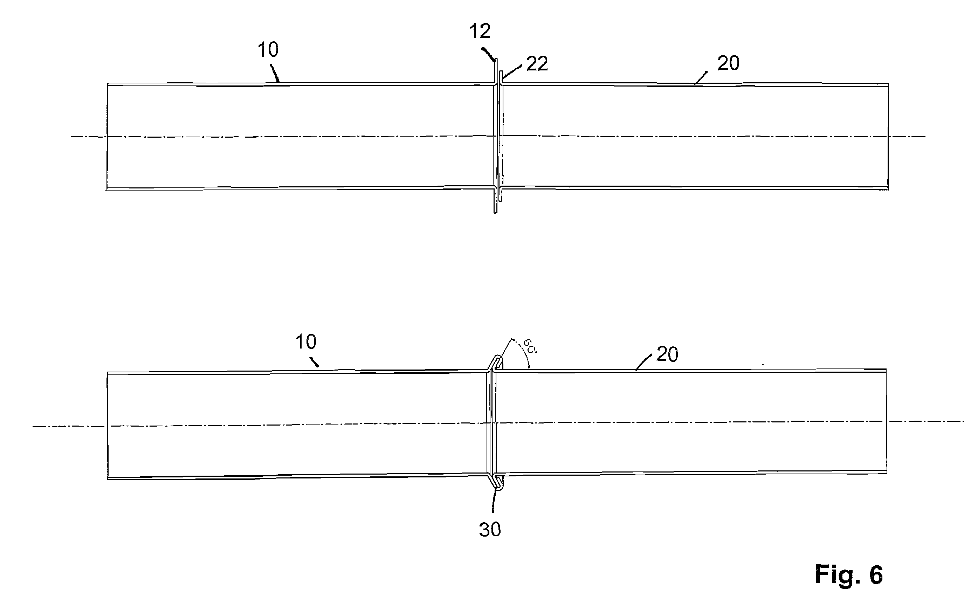

Fig. 6 zeigt eine unter einem geringen Winkel ausgebildete Einfachfalzverbindung, wie sie zwischen Rohren unterschiedlicher Duktilität oder solchen aus unterschiedlich teurem Material ausgebildet werden kann.

Wie aus dem obigen Beispielen ersichtlich, ist durch Falzen in überraschender Weise eine Verbindung zwischen Rohren und das Befestigen von Rohrinnenteilen möglich, welche bisher nicht oder nur unter größten Schwierigkeiten erzielt werden konnte. Insbesondere wird dadurch das Problem der Verbindung von dickwandigen mit dünnwandigen Rohren und auch von nicht schweißbaren Legierungen gelöst.

Obwohl die Erfindung anhand bevorzugter Ausführungsbeispiele näher erläutert wurde, ist sie keineswegs auf dasselbe eingeschränkt sondern dem Fachmann ist offensichtlich, dass verschiedenste Ausführungen im Rahmen des Schutzumfangs der beiliegenden Ansprüche möglich sind.

### Bezugszeichenliste

- 10: Rohr
- 12: aufgebogener Endbereich von 10

- 20: Rohr
- 22: aufgebogenes Endteil von 20

- 30: Falz

- 36: eingefalztes Dichtelement

- 40: Resonator-Innenrohr
- 42: Befestigungsaußenflansch auf 40

## Patentansprüche

1. Verfahren zum Verbinden von Rohren, **dadurch gekennzeichnet, dass** ein erstes Rohr mit einem zweiten Rohr durch Falzen verbunden wird, wobei mindestens ein Rohr aus einem zum Falzen ausreichend duktilen Material besteht.

2. Verfahren nach Anspruch 1, **dadurch gekennzeichnet, dass** das erste Rohr aus einem anderen Material als das zweite Rohr besteht.

3. Verfahren nach einem der vorangehenden Ansprüche, **dadurch gekennzeichnet, dass** mindestens ein Rohr ein Metall-Rohr ist.

4. Verfahren nach Anspruch 3, **dadurch gekennzeichnet, dass** mindestens ein Rohr ausgewählt ist aus der Gruppe bestehend aus duktilen Eisenlegierungen, duktilen Aluminiumlegierungen.

5. Verfahren nach Anspruch 4, **dadurch gekennzeichnet, dass** das Material des ersten Rohres andere Eigenschaften als das Material des zweiten Rohres besitzt, ausgewählt aus thermischen Ausdehnungskoeffizienten und Duktilität.

6. Verfahren nach einem der vorangehenden Ansprüche, **dadurch gekennzeichnet, dass** mindestens ein Rohrende vor dem Falzen erwärmt wird.

7. Verfahren nach einem der vorangehenden Ansprüche, **dadurch gekennzeichnet, dass** die verbundenen Rohre nach dem Falzen gehärtet werden.

8. Verfahren nach einem der vorangehenden Ansprüche, **dadurch gekennzeichnet, dass** in den Rohr-Falz (30) weiteres Material (36) eingefalzt/eingeklemmt wird, ausgewählt au der Gruppe bestehend aus: Resonatoren (40, 42), Schalldämpferelementen, Meßsonden, Rohreinbauten, Blenden und Strömungsleitanordnungen.

9. Rohrverbindung aus zwei Rohren, hergestellt nach einem Verfahren gemäß Anspruch 1 - 8, **gekennzeichnet durch** eine Falzverbindung im Verbindungsbereich.

10. Rohrverbindung nach Anspruch 9, **dadurch gekennzeichnet, dass** die beiden Rohre aus unterschiedlichem Material bestehen.

11. Rohrverbindung nach Anspruch 10, **dadurch gekennzeichnet, dass** mindestens ein Rohr aus einem metallischen Werkstoff ist.

12. Rohrverbindung nach Anspruch 9 oder 10, **dadurch gekennzeichnet, dass** das eine Rohr aus austenitischem Stahl und das andere Rohr aus ferritischem Stahl ist.

13. Rohrverbindung nach einem der Ansprüche 9 - 12, **dadurch gekennzeichnet, dass** ein Rohr nicht aus duktilem Material ist.

14. Rohrverbindung nach einem der Ansprüche 9 - 13, **dadurch gekennzeichnet, daß** in den Rohrfalz (30) weiteres Material (36) eingefalzt/eingeklemmt ist, ausgewählt aus der Gruppe bestehend aus: Resonatoren (40, 42), Schalldämpferelementen, Meßsonden, Rohreinbauten, Blenden und Strömungsleitanordnungen.

## Geänderte Patentansprüche

### Geänderte Patentansprüche gemäss Regel 137(2) EPÜ.

**1.** Verfahren zum Verbinden von Rohren, **dadurch gekennzeichnet, dass** ein erstes Rohr (10) mit einem zweiten Rohr (20) durch Falzen verbunden wird, wobei beide Rohre (10, 20) aus einem zum Falzen ausreichend duktilen Material bestehen und die beiden aufgebogenen Endbereiche (12, 229)aneinandergelegt, mittels eines Falzwerkzeugs zunächst der längere aufgebogene Endbereichl um den kürzeren aufgebogenen Endbereich gelegt und sodann dieses Sandwhich an die Rohroberfläche angelegt wird.

**2.** Verfahren nach Anspruch 1, **dadurch gekennzeichnet, dass** das erste Rohr (10) aus einem anderen Material als das zweite Rohr (20) besteht.

**3.** Verfahren nach einem der vorangehenden Ansprüche, **dadurch gekennzeichnet, dass** mindestens ein Rohr ein Metall-Rohr ist.

**4.** Verfahren nach Anspruch 3, **dadurch gekennzeichnet, dass** mindestens ein Rohr ausgewählt ist aus der Gruppe bestehend aus duktilen Eisenlegierungen, duktilen Aluminiumlegierungen.

**5.** Verfahren nach Anspruch 4, **dadurch gekennzeichnet, dass** das Material des ersten Rohres (10) andere Eigenschaften als das Material des zweiten Rohres (20) besitzt, ausgewählt aus thermischen Ausdehnungskoeffizienten und Duktilität.

**6.** Verfahren nach einem der vorangehenden Ansprüche, **dadurch gekennzeichnet, dass** mindestens ein Rohrende vor dem Falzen erwärmt wird.

**7.** Verfahren nach einem der vorangehenden Ansprüche, **dadurch gekennzeichnet, dass** die verbundenen Rohre (10, 20) nach dem Falzen gehärtet werden.

**8.** Verfahren nach einem der vorangehenden Ansprüche, **dadurch gekennzeichnet, dass** in den Rohr-Falz (30) weiteres Material (36) eingefalzt/eingeklemmt wird, ausgewählt aus der Gruppe bestehend aus: Resonatoren (40, 42), Schalldämpferelementen, Meßsonden, Rohreinbauten, Blenden und Strömungsleitanordnungen.

**9.** Rohrverbindung aus zwei Rohren (10, 20), hergestellt nach einem Verfahren gemäß Anspruch 1-8, **gekennzeichnet durch** eine Falzverbindung im Verbindungsbereich.

**10.** Rohrverbindung nach Anspruch 9, **dadurch gekennzeichnet, dass** die beiden Rohre (10, 20) aus unterschiedlichem Material bestehen.

**11.** Rohrverbindung nach Anspruch 10, **dadurch gekennzeichnet, dass** mindestens ein Rohr aus einem metallischen Werkstoff ist.

**12.** Rohrverbindung nach Anspruch 9 oder 10, **dadurch gekennzeichnet, dass** das eine Rohr aus austenitischem Stahl und das andere Rohr aus ferritischem Stahl ist.

**13.** Rohrverbindung nach einem der Ansprüche 9 - 12, **dadurch gekennzeichnet, daß** in den Rohrfalz (30) weiteres Material (36) eingefalzt/eingeklemmt ist, ausgewählt aus der Gruppe bestehend aus: Resonatoren (40, 42), Schalldämpferelementen, Meßsonden, Rohreinbauten, Blenden und Strömungsleitanordnungen.
